# EUROPEAN PATENT APPLICATION

(11) **EP 3 917 199 A1**
(43) Date of publication of application: **01.12.2021**
(21) Application number: 20756027.7
(22) Date of filing: 10.02.2020
(51) Int. Cl.: H04W 24/04

(54) **METHOD AND DEVICE FOR TRIGGERING RADIO LINK FAILURE**

(30) Priority: 14.02.2019 CN 201910114948
(71) Applicant: Huawei Technologies Co., Ltd., Shenzhen, Guangdong 518129 (CN)
(72) Inventor: LIU, Jing, Shenzhen, Guangdong 518129 (CN); DAI, Mingzeng, Shenzhen, Guangdong 518129 (CN)
(74) Representative: Gill Jennings & Every LLP
(86) International application number: PCT/CN2020/074651
(87) International publication number: WO 2020/164459

(57) **Abstract**

Embodiments of this application provide a triggering method for a radio link failure and a device. The method includes: A first node obtains first indication information, where the first indication information includes a maximum quantity of hybrid automatic repeat request HARQ retransmissions performed by the first node on a second node, or a maximum quantity of times of HARQ NACKs that are sent by the second node and that are received by the first node; and the first node determines, based on the first indication information, whether a radio link failure occurs on a link between the first node and the second node. According to the embodiments of this application, a radio link failure occurred on an intermediate backhaul link can be detected in time, so that link recovery is performed in time, thereby ensuring normal data transmission.

## Description

This application claims priority to Chinese Patent Application No. 2019101149482, filed with the China National Intellectual Property Administration on February 14, 2019 and entitled "TRIGGERING METHOD FOR RADIO LINK FAILURE AND DEVICE", which is incorporated herein by reference in its entirety.

### TECHNICAL FIELD

Embodiments of this application relate to the field of communications technologies, and in particular, to a triggering method for a radio link failure and a device.

### BACKGROUND

With rapid development of communications technologies, a radio access network is widely applied. In an actual application process, a radio link usually needs to be established between a radio access device and a terminal device, to transmit a service. However, in a data transmission process, because a factor such as an environment affects transmission of the radio link, a radio link failure is triggered, and the radio link is recovered to perform data retransmission.

In the prior art, there are a plurality of data backhaul devices between the terminal device and the radio access device (for example, a donor base station). In an end-to-end transmission process between the terminal device and the radio access device, when the terminal device transmits data to the radio access device, the data is transmitted to the radio access device through the plurality of data backhaul devices. When the radio access device transmits data to the terminal device, the data is also transmitted to the terminal device through the plurality of data backhaul devices.

However, because there are the plurality of data backhaul devices between the terminal device and the radio access device, when an end-to-end ARQ is used, if the radio link failure occurs on an intermediate backhaul link, the radio link failure may not be discovered, and link recovery may not be performed in time. Consequently, the data cannot be transmitted.

### SUMMARY

Embodiments of this application provide a triggering method for a radio link failure and a device, so that a radio link failure occurred on an intermediate backhaul link can be detected in time, and link recovery is performed in time, thereby ensuring normal data transmission.

According to a first aspect, an embodiment of this application provides a triggering method for a radio link failure. The method includes:

A first node obtains first indication information, where the first indication information includes a maximum quantity of retransmissions performed by the first node on a second node, namely, a maximum quantity of times that the first node retransmits data to the second node based on a hybrid automatic repeat request HARQ mechanism, or a maximum quantity of times of HARQ NACKs that are sent by the second node and that are received by the first node; and
the first node determines, based on the first indication information, whether a radio link failure occurs on a link between the first node and the second node.

In a possible design, the first node is a data backhaul device, and the second node is a child node or a parent node of the first node. Retransmission is performed between nodes based on the HARQ retransmission mechanism. The HARQ retransmission is implemented at a MAC layer, and may be fed back hop by hop. The HARQ retransmission may be performed between the nodes instead of end-to-end retransmission. Therefore, an interface with poor link quality can be accurately determined, so that link reestablishment can be triggered.

In a possible design, that the first node determines, based on the first indication information, whether a radio link failure occurs on a link between the first node and the second node includes:

If a quantity of HARQ retransmissions performed by the first node on the second node is greater than or equal to the maximum quantity of the retransmissions indicated in the first indication information, the first node determines that the radio link failure occurs on the link between the first node and the second node; or
if a quantity of times of HARQ NACKs that are sent by the second node and that are received by the first node is greater than or equal to the maximum quantity of the times of the NACKs indicated in the first indication information, the first node determines that the radio link failure occurs on the link between the first node and the second node.

The nodes can accurately detect radio link quality in time based on the HARQ transmission mechanism at the MAC layer, determine whether the radio link failure occurs based on the maximum quantity of the retransmissions and the maximum quantity of the times of the NACKs, and recover the link by triggering an RRC connection reestablishment procedure or a handover process, thereby ensuring timely data transmission.

In a possible design, that a first node obtains first indication information includes:

The first node receives a radio resource control RRC message from a first network device, where the RRC message includes the maximum quantity of the retransmissions or the maximum quantity of the times of the NACKs, and the first network device is a donor base station.

The donor base station configures the maximum quantity of the retransmissions or the maximum quantity of the times of the NACKs for each node, so that the donor base station manages and controls the entire link. This facilitates overall allocation and an implementation is simple.

In a possible design, if the second node is the parent node of the first node,
the RRC message is determined by the first network device based on second indication information, the second indication information includes the maximum quantity of the retransmissions or the maximum quantity of the times of the NACKs, and the second indication information is sent by the second node to the first network device.

The parent node of the first node configures the maximum quantity of the retransmissions or the maximum quantity of the times of the NACKs for the second node, so that load of the donor base station is reduced, and the second node performs flexible configuration based on an actual situation.

In a possible design, if the second node is the child node of the first node, that a first node obtains first indication information includes:

The first node determines the maximum quantity of the retransmissions or the maximum quantity of the times of the NACKs.

When the first node is used as the parent node, the first node may perform flexible configuration based on an actual situation, thereby reducing load of the donor base station.

In a possible design, if the second node is the parent node of the first node, and the first node determines that the radio link failure occurs on the link between the first node and the second node, the method further includes:

The first node sends third indication information to a first terminal device, where the third indication information is used to trigger the first terminal device to perform automatic repeat request ARQ retransmission at a radio link control RLC layer.

In an uplink transmission process, the third indication information is used to trigger the first terminal device to perform the ARQ retransmission at the RLC layer, to ensure that end-to-end transmission between the first terminal device and the donor base station can be normally performed, and ensure that no packet is lost.

In a possible design, if the second node is the child node of the first node, and the first node determines that the radio link failure occurs on the link between the first node and the second node, the method further includes:

The first node sends fourth indication information to a second network device, where the fourth indication information is used to trigger the second network device to perform automatic repeat request ARQ retransmission at a radio link control RLC layer, and the second network device is a donor base station.

In a downlink transmission process, the fourth indication information is used to trigger the donor base station to perform the ARQ retransmission at the RLC layer, to ensure that end-to-end transmission between the donor base station and the first terminal device can be normally performed.

According to a second aspect, an embodiment of this application provides a triggering method for a radio link failure. The method includes:

A first node determines, based on a downlink reference signal sent by a second node, whether a radio link failure occurs on a link between the first node and the second node, where the second node is a parent node of the first node; and
if the radio link failure occurs, the first node sends indication information to a terminal device, where the indication information is used to trigger the terminal device to send an RLC status report to a network device.

Whether the radio link failure occurs may be determined by using the downlink reference signal, and this may determine whether the radio link failure occurs between nodes, so that an RRC connection reestablishment procedure or a handover process can be accurately triggered to recover the link.

In a possible design, the indication information is carried in a radio resource control RRC message.

In a possible design, the indication information is carried in a media access control control element MAC CE.

In a possible design, if the first node is not a parent node of the terminal device, that the first node sends indication information to a terminal device includes:

The first node sends the indication information to the terminal device through forwarding by an intermediate node.

According to a third aspect, an embodiment of this application provides a triggering method for a radio link failure. The method includes:

A second node triggers RRC reestablishment when detecting that a radio link failure occurs on a radio link between the second node and a first node; and
the second node sends first indication information to a third node, where the first indication information is used to indicate a result of the RRC reestablishment of the second node, where the third node may determine, based on the result of the RRC reestablishment of the second node, whether the third node performs the RRC reestablishment, to ensure normal transmission on a link, where
the second node is a child node of the first node, and is a parent node of the third node.

In a possible design, the first indication information is used to indicate that the RRC reestablishment performed by the second node fails, or is used to indicate the third node to determine a radio link failure RLF, or is used to indicate the third node to trigger the RRC reestablishment.

When the RRC reestablishment performed by the second node fails, the second node sends, to the third node, the first indication information used to indicate that the RRC reestablishment fails, so that the third node can trigger the RRC reestablishment. This ensures that the third node can perform link reestablishment in time, and ensures that the third node can normally transmit data.

In a possible design, before that the second node sends first indication information to a third node, the method further includes:

The second node sends second indication information to the third node, where the second indication information is used to indicate that the radio link failure occurs on the radio link between the second node and the first node.

In a possible design, the first indication information is used to indicate that the RRC reestablishment performed by the second node fails or succeeds.

According to a fourth aspect, an embodiment of this application provides a triggering method for a radio link failure. The method includes:

A third node receives first indication information sent by a second node, where the first indication information is sent by the second node after the second node determines that a radio link failure occurs on a radio link between the second node and a first node, and the first indication information is used to indicate a result of RRC reestablishment of the second node; and
the third node determines, based on the first indication information, whether to trigger the RRC reestablishment, where
the second node is a child node of the first node, and is a parent node of the third node.

In a possible design, that the third node determines, based on the first indication information, whether to trigger the RRC reestablishment includes:

If the first indication information is used to indicate that the RRC reestablishment performed by the second node fails, or is used to indicate the third node to determine a radio link failure RLF, or is used to indicate the third node to trigger the RRC reestablishment, the third node determines that the radio link failure occurs or triggers the RRC reestablishment.

In a possible design, before that a third node receives first indication information sent by a second node, the method further includes:

The third node starts a timer after the third node receives second indication information sent by the second node, where the second indication information is used to indicate that the radio link failure occurs on the radio link between the second node and the first node.

In a possible design, if the first indication information is received before the timer expires, that the third node determines whether to trigger the RRC reestablishment includes:

If the first indication information is used to indicate that the RRC reestablishment performed by the second node fails, the third node triggers the RRC reestablishment, and stops the timer; or
if the first indication information is used to indicate that the RRC reestablishment performed by the second node succeeds, the third node stops the timer.

In a possible design, if the timer expires, the third node determines that the radio link failure occurs or triggers the RRC reestablishment.

After receiving the second indication information used to indicate that the radio link failure occurs, the third node starts the timer, and determines, based on the first indication information received before the timer expires, whether to trigger the radio link failure or the RRC reestablishment. This ensures that the third node can perform link reestablishment in time, and ensures that the third node can normally transmit data.

According to a fifth aspect, an embodiment of this application provides a data backhaul device, where the device is referred to as a first node and includes:
a processing module, configured to determine, based on a downlink reference signal sent by a second node, whether a radio link failure occurs on a link between the first node and the second node, where the second node is a parent node of the first node; and
a sending module, configured to: if the radio link failure occurs, send indication information to a terminal device, where the indication information is used to trigger the terminal device to send an RLC status report to a network device.

In a possible design, the indication information is carried in a radio resource control RRC message.

In a possible design, the indication information is carried in a media access control control element MAC CE.

In a possible design, if the first node is not a parent node of the terminal device, the sending module is specifically configured to: send the indication information to the terminal device through forwarding by an intermediate node.

According to a sixth aspect, an embodiment of this application provides a data backhaul device, where the device is referred to as a first node and includes:
an obtaining mode, configured to obtain first indication information, where the first indication information includes a maximum quantity of hybrid automatic repeat request HARQ retransmissions performed by the first node on a second node, or a maximum quantity of times of HARQ NACKs that are sent by the second node and that are received by the first node; and
a processing module, configured to determine, based on the first indication information, whether a radio link failure occurs on a link between the first node and the second node.

In a possible design, the first node is the data backhaul device, and the second node is a child node or a parent node of the first node.

In a possible design, the processing module is specifically configured to:
if a quantity of HARQ retransmissions performed by the first node on the second node is greater than or equal to the maximum quantity of the retransmissions indicated in the first indication information, determine that the radio link failure occurs on the link between the first node and the second node; or
if a quantity of times of HARQ NACKs that are sent by the second node and that are received by the first node is greater than or equal to the maximum quantity of the times of the NACKs indicated in the first indication information, determine that the radio link failure occurs on the link between the first node and the second node.

In a possible design, the obtaining module is specifically configured to: receive a radio resource control RRC message from a first network device, where the RRC message includes the maximum quantity of the retransmissions or the maximum quantity of the times of the NACKs, and the first network device is a donor base station.

In a possible design, if the second node is the parent node of the first node, the RRC message is determined by the first network device based on second indication information, the second indication information includes the maximum quantity of the retransmissions or the maximum quantity of the times of the NACKs, and the second indication information is sent by the second node to the first network device.

In a possible design, if the second node is the child node of the first node, the obtaining module is specifically configured to: determine, the maximum quantity of the retransmissions or the maximum quantity of the times of the NACKs.

In a possible design, if the second node is the parent node of the first node, the device further includes a sending module, where
the sending module is configured to send third indication information to a first terminal device when it is determined that the radio link failure occurs on the link between the first node and the second node, where the third indication information is used to trigger the first terminal device to perform automatic repeat request ARQ retransmission at a radio link control RLC layer.

In a possible design, if the second node is the child node of the first node, the device further includes a sending module, where
the sending module is configured to send fourth indication information to a second network device when it is determined that the radio link failure occurs on the link between the first node and the second node, where the fourth indication information is used to trigger the second network device to perform automatic repeat request ARQ retransmission at a radio link control RLC layer, where the second network device is a donor base station.

According to a seventh aspect, an embodiment of this application provides a data backhaul device, where the device is referred to as a second node and includes:
a processing module, configured to trigger RRC reestablishment when detecting that a radio link failure occurs on a radio link between the second node and a first node; and
a sending module, configured to send first indication information to a third node, where the first indication information is used to indicate a result of the RRC reestablishment of the second node, where
   the second node is a child node of the first node, and is a parent node of the third node.

In a possible design, the first indication information is used to indicate that the RRC reestablishment performed by the second node fails, or is used to indicate the third node to determine a radio link failure RLF, or is used to indicate the third node to trigger the RRC reestablishment.

In a possible design, the sending module is further configured to: before the second node sends the first indication information to the third node, send second indication information to the third node, where the second indication information is used to indicate that the radio link failure occurs on the radio link between the second node and the first node.

In a possible design, the first indication information is used to indicate that the RRC reestablishment performed by the second node fails or succeeds.

According to an eighth aspect, an embodiment of this application provides a data backhaul device, where the device is referred to as a third node and includes:
a receiving module, configured to receive first indication information sent by a second node, where the first indication information is sent by the second node after the second node determines that a radio link failure occurs on a radio link between the second node and a first node, and the first indication information is used to indicate a result of RRC reestablishment of the second node; and
a processing module, configured to determine, based on the first indication information, whether to trigger the RRC reestablishment, where
   the second node is a child node of the first node, and is a parent node of the third node.

In a possible design, the processing module is specifically configured to:
if the first indication information is used to indicate that the RRC reestablishment performed by the second node fails, or is used to indicate the third node to determine a radio link failure RLF, or is used to indicate the third node to trigger the RRC reestablishment, determine that the radio link failure occurs or trigger the RRC reestablishment.

In a possible design, the receiving module is further configured to: before the third node receives the first indication information sent by the second node, start a timer after the receiving module receives second indication information sent by the second node, where the second indication information is used to indicate that the radio link failure occurs on the radio link between the second node and the first node.

In a possible design, if the first indication information is received before the timer expires, the processing module is specifically configured to:
if the first indication information is used to indicate that the RRC reestablishment performed by the second node fails, trigger the RRC reestablishment, and stop the timer; or
if the first indication information is used to indicate that the RRC reestablishment performed by the second node succeeds, stop the timer.

In a possible design, if the timer expires, the processing module is further configured to determine a the radio link failure occurs or trigger RRC reestablishment.

According to a ninth aspect, an embodiment of this application provides a data backhaul device. The device includes a memory, a processor, and a computer program, where the computer program is stored in the memory, and the processor runs the computer program to perform:
the method according to the first aspect or the possible designs of the first aspect; or
the method according to the second aspect or the possible designs of the second aspect; or
the method according to the third aspect or the possible designs of the third aspect; or
the method according to the fourth aspect or the possible designs of the fourth aspect.

According to a tenth aspect, an embodiment of this application provides a storage medium, where the storage medium includes a computer program, and the computer program is used to implement:
the method according to the first aspect or the possible designs of the first aspect; or
the method according to the second aspect or the possible designs of the second aspect; or
the method according to the third aspect or the possible designs of the third aspect; or
the method according to the fourth aspect or the possible designs of the fourth aspect.

According to a eleventh aspect, an embodiment of this application provides a computer program product, where the computer program product includes computer program code, and when the computer program code is run on a computer, the computer is enabled to perform:
the method according to the first aspect or the possible designs of the first aspect; or
the method according to the second aspect or the possible designs of the second aspect; or
the method according to the third aspect or the possible designs of the third aspect; or
the method according to the fourth aspect or the possible designs of the fourth aspect.

According to a twelfth aspect, an embodiment of this application provides a chip. The chip includes a processor, and may further include a memory, where the memory is configured to store a computer program, and the processor is configured to execute the computer program in the memory, so that a communications device on which the chip is installed performs:
the method according to the first aspect or the possible designs of the first aspect; or
the method according to the second aspect or the possible designs of the second aspect; or
the method according to the third aspect or the possible designs of the third aspect; or
the method according to the fourth aspect or the possible designs of the fourth aspect.

According to the triggering method for the radio link failure and the device provided in the embodiments of this application, in the method, the first node obtains the first indication information, where the first indication information includes the maximum quantity of the hybrid automatic repeat request HARQ retransmissions or the maximum quantity of the times of the HARQ NACKs; and the first node determines, based on the first indication information, whether the radio link failure occurs on the link between the first node and the second node. In a transmission scenario in which an end-to-end ARQ mechanism is used, the nodes can accurately detect the radio link quality in time based on the HARQ transmission mechanism at the MAC layer. If the link quality is quite poor, it is considered that the radio link failure occurs, and the link is recovered by triggering the RRC connection reestablishment procedure or the handover process.

### BRIEF DESCRIPTION OF DRAWINGS

FIG. 1 is a schematic diagram of a network architecture to which an embodiment of this application may be applicable;
FIG. 2 is an end-to-end user plane protocol stack architecture according to an embodiment of this application;
FIG. 3 is a schematic diagram of a scenario of a radio link failure according to an embodiment of this application;
FIG. 4 is a flowchart of a triggering method for a radio link failure according to an embodiment of this application;
FIG. 5 is a schematic diagram of a scenario of an uplink transmission-based radio link failure according to an embodiment of this application;
FIG. 6 is a schematic diagram of a scenario of a downlink transmission-based radio link failure according to an embodiment of this application;
FIG. 7 is a flowchart of a triggering method for a radio link failure according to an embodiment of this application;
FIG. 8 is a schematic diagram of a scenario of a downlink transmission-based radio link failure according to an embodiment of this application;
FIG. 9 is a schematic diagram of a triggering scenario of a radio link failure according to an embodiment of this application;
FIG. 10 is a schematic diagram of a scenario of a radio link failure according to an embodiment of this application;
FIG. 11 is a flowchart of triggering signaling for a radio link failure according to an embodiment of this application;
FIG. 12 is a flowchart of triggering signaling for a radio link failure according to an embodiment of this application;
FIG. 13 is a schematic structural diagram of a data backhaul device according to an embodiment of this application;
FIG. 14 is a schematic structural diagram of a data backhaul device according to an embodiment of this application;
FIG. 15 is a schematic structural diagram of a data backhaul device according to an embodiment of this application;
FIG. 16 is a schematic structural diagram of a data backhaul device according to an embodiment of this application; and
FIG. 17 is a schematic structural diagram of a data backhaul device according to an embodiment of this application.

### DESCRIPTION OF EMBODIMENTS

A network architecture and a service scenario that are described in the embodiments of this application are intended to describe the technical solutions in the embodiments of this application more clearly, and do not constitute a limitation on the technical solutions provided in the embodiments of this application. A person of ordinary skill in the art may know that with evolution of the network architecture and emergence of new service scenarios, the technical solutions provided in the embodiments of this application are also applicable to similar technical problems.

The embodiments of this application may be used in a wireless communications system. It should be noted that the wireless communications system mentioned in the embodiments of this application includes but is not limited to: a narrowband internet of things (Narrow Band-Internet of Things, NB-IoT) system, a global system for mobile communications (Global System for Mobile Communications, GSM) system, an enhanced data rate for GSM evolution (Enhanced Data rate for GSM Evolution, EDGE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronization Code Division Multiple Access, TD-SCDMA) system, a long term evolution (Long Term Evolution, LTE) system, and a next generation 5G new radio (New Radio, NR) mobile communications system.

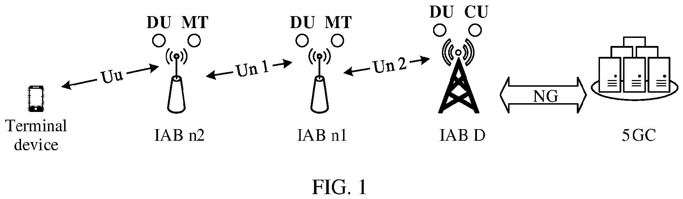

With reference to FIG. 1, the following describes a possible network architecture according to an embodiment of this application. FIG. 1 is a schematic diagram of a network architecture to which an embodiment of this application may be applicable. As shown in FIG. 1, the multi-hop relay network architecture includes a terminal device, a plurality of integrated access and backhaul (Integrated Access and Backhaul, IAB) nodes, and an IAB donor (donor) network device. In this embodiment, for ease of description, a two-hop data backhaul link is used as an example for description. As shown in FIG. 1, the network architecture includes an IAB donor (IAB donor, where the IAB donor may be referred to as an IAB donor base station, an IAB donor node, a donor IAB node, a donor IAB base station, or the like, and this is not limited in the present invention), an IAB node 1 (IAB node 1, IAB n1) and an IAB node 2 (IAB node 2, IAB n2), and a terminal device. The terminal device accesses the IAB donor (IAB D) through the IAB node 1 and the IAB node 2, and the IAB donor is connected to a core network 5GC through an NG interface. A link between the IAB node 1 and the IAB node 2 and a link between the IAB node 1 and the IAB donor provide two-hop data backhaul for the terminal device.

For example, the relay network architecture may be used for millimeter wave integrated access and backhaul, so that 5G high-speed and low-latency communication can be implemented with support of an IAB technology in urban building-intensive areas and isolated islands or mountainous areas where it is difficult for optical fibers to be deployed. An application scenario of the relay network architecture is not particularly limited in this embodiment.

In a possible implementation, if the relay network architecture uses a CU-DU split architecture, the IAB donor includes a central unit (Central Unit, CU) and a distributed unit (Distributed Unit, DU). The IAB node includes a DU module and a mobile terminal (Mobile Termination, MT) module. The IAB node DU module provides a portion of functions of a gNB (for example, a function of a physical layer (Physical Layer, PHY), a function of a MAC layer, or a function of an RLC layer of the gNB). A child node of the IAB node DU may provide an access service, and the child node of the IAB node DU may be a common terminal device or another IAB node. The IAB node MT module is similar to a terminal device, and accesses a previous node of the IAB node, for example, a parent node (for example, the parent node may be another IAB node or an IAB donor node) through the IAB node MT module, to provide data backhaul for data of the child node under the IAB node DU. Due to introduction of the IAB node, air interfaces for wireless transmission may be classified into two types: an air interface between the IAB node and the terminal device, and an air interface between the IAB node and the IAB donor/an air interface between IAB nodes. For example, the air interface between the IAB node and the terminal may be referred to as a Uu interface, and the air interface between the IAB node and the IAB donor may be referred to as a Un interface. The air interface in this patent may also have other names. This is not limited in this patent and falls within the scope defined in this application.

The terminal device may be a wireless terminal. The wireless terminal may be a device that provides a user with voice and/or other service data connectivity, a handheld device with a wireless connection function, or another processing device connected to a radio modem. The wireless terminal may communicate with one or more core networks through a radio access network (Radio Access Network, RAN). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchange a voice and/or data with the radio access network.

In a conventional LTE or NR system, reliability of data transmission may be ensured by using a two-layer retransmission mechanism, including an automatic repeat request (Automatic Repeat Request, ARQ) of a radio link control (Radio Link Control, RLC) protocol layer and a hybrid automatic repeat request (Hybrid Automatic Repeat Request, HARQ) of a media access control (Medium Access Control, MAC) layer. In this embodiment, an end-to-end ARQ mechanism is used between the terminal device and the IAB donor, that is, an RLC ARQ function that is peered to that of the terminal device is located on the IAB donor DU, and an RLC layer on an intermediate node IAB node 1 and an RLC layer on an intermediate node IAB node 2 do not include the ARQ function but include only an RLC SDU segmentation function. A hop-by-hop HARQ mechanism is used between the terminal device and the IAB donor. In other words, each access link and each backhaul link separately support an independent HARQ function. To be specific, there is an independent HARQ mechanism between the terminal device and the IAB node 2, there is an independent HARQ mechanism between the IAB node 1 and the IAB node 2, and there is an independent HARQ mechanism between the IAB node 1 and the IAB donor.

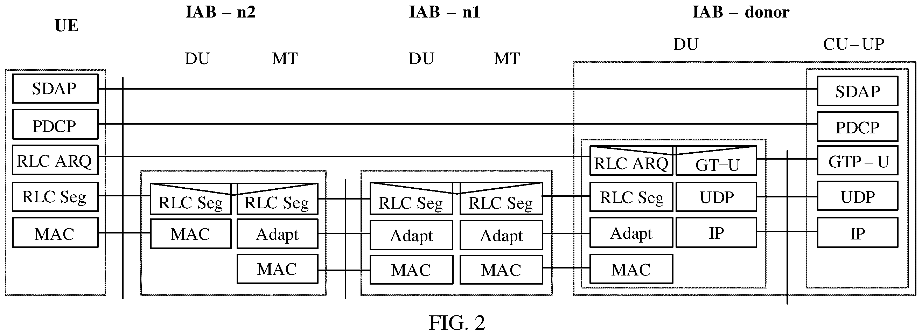

A user plane protocol stack architecture using an end-to-end ARQ may be shown in FIG. 2. FIG. 2 is a user plane protocol stack architecture using an end-to-end ARQ according to an embodiment of this application. As shown in FIG. 2, a terminal device and an IAB donor have peer protocol layers, including service data adaptation protocol (Service Data Adaptation Protocol, SDAP) layers, packet data convergence protocol (Packet Data Convergence Protocol, PDCP) layers, and RLC layers. The peer RLC layers of the terminal device and the IAB donor include only an ARQ function. The terminal device and an IAB node 2 have peer protocol layers, including RLC layers, MAC layers, and PHY layers. The peer RLC layers of the terminal device and the IAB node 2 include only a segmentation function. The IAB node 1 and the IAB node 2 have peer protocol layers, including RLC layers, MAC layers, and PHY layers. The peer RLC layers of the IAB node 1 and the IAB node 2 include only a segmentation function, and do not include an ARQ function. The IAB node 1 and the IAB donor have peer protocol layers, including RLC layers, MAC layers, and PHY layers. The peer RLC layers of the IAB node 1 and the IAB donor include only a segmentation function.

For the protocol stack shown in FIG. 2, the CU is connected to a core network (5GC) through an NG interface, and controls and coordinates a plurality of cells in an access network, to implement an RRC function and a PDCP layer function on a control plane, and an IP function, an SDAP function, and a PDCP function on a user plane. The DU implements a radio frequency processing function, a baseband processing function of an RLC layer, a baseband processing function of a MAC layer, or the like.

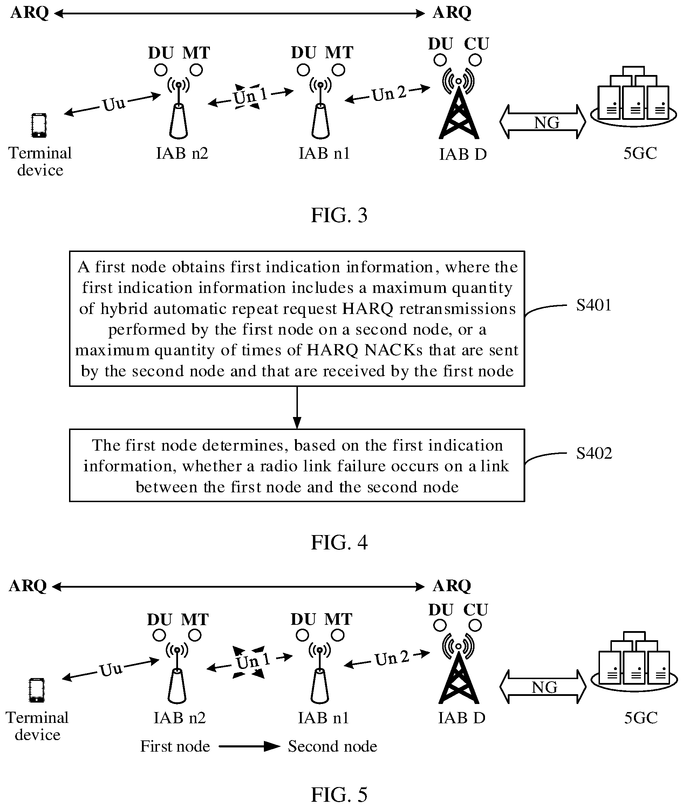

It can be learned from FIG. 2 that an RLC ARQ function of the terminal device is established on the terminal device and a DU of the IAB donor, and the RLC layers on the intermediate IAB nodes have only a segmentation function. Therefore, the intermediate IAB nodes cannot discover that a radio link failure occurs on a backhaul link, and cannot perform link recovery in time. Consequently, data cannot be transmitted. The following provides an example for description with reference to FIG. 3.

FIG. 3 is a schematic diagram of a scenario of a radio link failure according to an embodiment of this application. As shown in FIG. 3, uplink data of a terminal device is successfully sent to an IAB node 2. However, because uplink quality of the IAB node 2 and an IAB node 1 is poor, the IAB node 2 cannot send the data of the terminal device to the IAB node 1. Consequently, an IAB donor cannot receive the data of the terminal device and feed back an RLC ARQ NACK to the terminal device, to trigger the terminal device to perform retransmission at an RLC layer. Once a quantity of retransmissions performed by the terminal device at the RLC layer reaches a maximum quantity of retransmissions, it is considered that a radio link failure (Radio Link Failure, RLF) occurs, and RRC reestablishment is triggered. However, link quality of a Uu interface is actually quite good, and it is unnecessary for the terminal device to select another IAB node to trigger an RRC reestablishment procedure. Actually, it is the IAB node 2 that needs to trigger the RRC reestablishment. However, because of an end-to-end ARQ, the IAB node 2 cannot trigger the RLF based on a maximum quantity of ARQ retransmissions.

In this embodiment of this application, retransmission is performed between the IAB nodes based on a HARQ retransmission mechanism. The HARQ retransmission is implemented at a MAC layer, and may be fed back hop by hop. It can be learned from FIG. 2 that the HARQ retransmission may be performed between the nodes instead of end-to-end retransmission. Therefore, an interface with poor link quality can be accurately determined, so that the IAB node is triggered to perform link reestablishment.

FIG. 4 is a flowchart of a triggering method for a radio link failure according to an embodiment of this application. As shown in FIG. 4, the method includes the following steps.

S401: A first node obtains first indication information, where the first indication information includes a maximum quantity of hybrid automatic repeat request HARQ retransmissions performed by the first node on a second node, or a maximum quantity of times of HARQ NACKs that are sent by the second node and that are received by the first node.

The first node may be a data backhaul device in the foregoing embodiments, namely, an IAB node. The first node is configured to transmit data between a terminal and a network device (a donor base station and an IAB donor). The first node integrates a radio access link and a radio backhaul link. The access link is a communication link between the terminal device and the first node, and the radio backhaul link is a communication link between the first node and another data backhaul device or the network device.

The second node may be a child node or a parent node of the first node. The parent node is a previous-hop node of the first node, namely, a node that directly receives uplink data sent by the first node or a node that directly sends downlink data to the first node. The child node is a next-hop node of the first node, namely, a node that directly receives downlink data sent by the first node or a node that directly sends uplink data to the first node.

The first node may obtain the first indication information in a plurality of manners, for example, obtain the first indication information from the donor base station, or generate the first indication information by the first node. The first indication information includes the maximum quantity of the retransmissions or the maximum quantity of the times of the NACKs, the maximum quantity of the retransmissions is a maximum quantity of times that the first node retransmits data to the second node, and the maximum quantity of the times of the NACKs is a maximum quantity of times that the first node receives a HARQ NACK sent by the second node.

In a possible manner, the first indication information includes the maximum quantity of the retransmissions or the maximum quantity of the times of the NACKs. In another possible manner, the first indication information is used to indicate the maximum quantity of the retransmissions or the maximum quantity of the times of the NACKs, and the indication may be an explicit indication or an implicit indication.

S402: The first node determines, based on the first indication information, whether a radio link failure occurs on a link between the first node and the second node.

The first node may determine, based on the first indication information, that no radio link failure occurs on the link between the first node and the second node. In a possible implementation, if a quantity of HARQ retransmissions performed by the first node on the second node is less than the maximum quantity of the retransmissions indicated in the first indication information, the first node considers that no radio link failure occurs on the link between the first node and the second node. In another possible implementation, if a quantity of times of HARQ NACKs that are sent by the second node and that are received by the first node is less than the maximum quantity of the times of the NACKs indicated in the first indication information, the first node considers that no radio link failure occurs on the link between the first node and the second node.

The first node may also determine, based on the first indication information, that the radio link failure occurs on the link between the first node and the second node. In a possible implementation, if a quantity of HARQ retransmissions performed by the first node on the second node is greater than or equal to the maximum quantity of the retransmissions indicated in the first indication information, the first node considers that the radio link failure occurs on the link between the first node and the second node. In another possible implementation, if a quantity of times of HARQ NACKs that are sent by the second node and that are received by the first node is greater than or equal to the maximum quantity of the times of the NACKs indicated in the first indication information, the first node considers that the radio link failure occurs on the link between the first node and the second node.

When the first node determines that the radio link failure occurs on the link between the first node and the second node, the first node may trigger link recovery. The link recovery may be implemented by using a radio resource control (Radio Resource Control, RRC) connection reestablishment procedure or a handover process. For example, the first node triggers the RRC connection reestablishment procedure, and selects a new cell for access. The new cell may be another cell served by the second node, or may be a cell served by another IAB node, or a cell served by the IAB donor. Alternatively, the first node triggers the handover process, and the first node hands over to a cell served by another IAB node or a cell served by the IAB donor.

According to the triggering method for the radio link failure provided in this embodiment of this application, the first node obtains the first indication information, where the first indication information includes the maximum quantity of the hybrid automatic repeat request HARQ retransmissions or the maximum quantity of the times of the NACKs; and the first node determines, based on the first indication information, whether the radio link failure occurs on the link between the first node and the second node. In a transmission scenario in which an end-to-end ARQ mechanism is used, the nodes can accurately detect radio link quality in time based on a HARQ transmission mechanism at a MAC layer. If the link quality is quite poor, it is considered that the radio link failure occurs, and the link is recovered by triggering the RRC connection reestablishment procedure or the handover process.

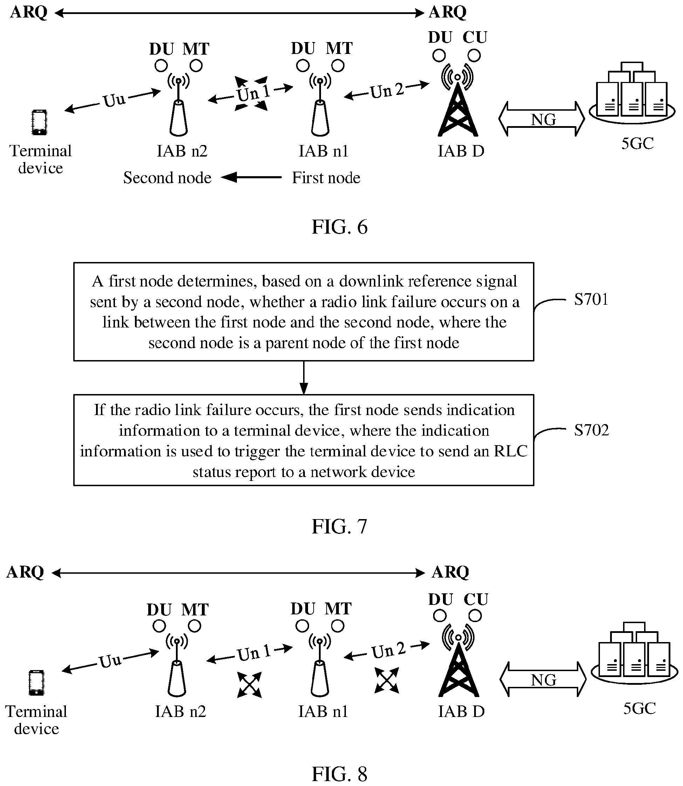

Based on the foregoing embodiments, the following describes uplink transmission in detail with reference to FIG. 5, and describes a downlink transmission process in detail with reference to FIG. 6.

### Embodiment of the uplink transmission

FIG. 5 is a schematic diagram of a scenario of an uplink transmission-based radio link failure according to an embodiment of this application. In the embodiment shown in FIG. 5, a newly added backhaul link RLF trigger condition is as follows: A quantity of HARQ retransmissions performed on an uplink (uplink, UL) backhaul link is equal to or greater than a maximum quantity of UL HARQ retransmissions, or a quantity of times of UL HARQ NACKs that are received is equal to or greater than a maximum quantity of times of NACKs.

A first node is a child node of a second node, the second node is a parent node of the first node, and the first node sends uplink data to the second node. When the first node finds that the quantity of the UL HARQ retransmissions reaches the specified maximum quantity of the retransmissions, or the quantity of the times of the HARQ NACKs received from the second node reaches the maximum quantity of the times of the NACKs, the first node determines that an RLF occurs on a link between the first node and the second node.

In an uplink transmission process, a manner in which the first node obtains first indication information may include the following possible implementations.

In a possible implementation, a donor base station (IAB donor, IAB D) configures the maximum quantity of the retransmissions or the maximum quantity of the times of the NACKs for each node.

Referring to FIG. 5 and FIG. 2, the IAB donor configures a maximum quantity of UL HARQ retransmissions or a maximum quantity of times of NACKs of a Un 1 interface for an IAB node 2, and the IAB donor configures a maximum quantity of UL HARQ retransmissions or a maximum quantity of times of NACKs of a Un 2 interface for an IAB node 1.

For example, the maximum quantity of the UL HARQ retransmissions or the maximum quantity of the times of the NACKs, of the Un 1 interface, configured by the IAB donor for the IAB node 2 may be determined and allocated by an IAB donor CU. The information is sent to an IAB node 2 MT through an RRC message.

The maximum quantity of the UL HARQ retransmissions or the maximum quantity of the times of the NACKs, of the Un 2 interface, configured by the IAB donor for the IAB node 1 may be determined and allocated by the IAB donor CU. The information is sent to an IAB node 1 MT through the RRC message.

In conclusion, the first node receives the radio resource control RRC message from a first network device, where the RRC message includes the maximum quantity of the retransmissions or the maximum quantity of the times of the NACKs, and the first network device is the donor base station.

In another possible implementation, the parent node determines the maximum quantity of the UL HARQ retransmissions or the maximum quantity of the times of the NACKs for the child node, the parent node sends the maximum quantity of the UL HARQ retransmissions or the maximum quantity of the times of the NACKs to a donor base station, and the donor base station configures the maximum quantity of the UL HARQ retransmissions or the maximum quantity of the times of the NACKs for each node.

For example, a maximum quantity of UL HARQ retransmissions or a maximum quantity of times of NACKs, of a Un 1 interface, configured by the IAB donor for an IAB node 2 may be determined and allocated by an IAB node 1 DU, and may be sent to an IAB donor CU through an F1AP message between the IAB node 1 DU and the IAB donor CU. The IAB donor CU sends the message to an IAB node 2 MT through an RRC message.

A maximum quantity of UL HARQ retransmissions or a maximum quantity of times of NACKs, of a Un 2 interface, configured by the IAB donor for an IAB node 1 may be determined and allocated by an IAB donor DU, and may be sent to the IAB donor CU through an F1AP message between the IAB donor DU and the IAB donor CU. The IAB donor CU sends the message to an IAB node 1 MT through the RRC message.

In conclusion, the second node is the parent node of the first node, the first indication information carried in the RRC message is determined by a first network device based on second indication information, the second indication information includes the maximum quantity of the retransmissions or the maximum quantity of the times of the NACKs, and the second indication information is sent by the second node to the first network device. The second indication information may be sent by the second node to the first network device through the F1AP message. The first indication information and the second indication information may be the same.

In another possible implementation, the parent node determines the maximum quantity of the retransmissions or the maximum quantity of the times of the NACKs for the child node, and then send the maximum quantity of the retransmissions or the maximum quantity of the times of the NACKs to the child node through a MAC CE or PDCCH DCI.

For example, a maximum quantity of UL HARQ retransmissions or a maximum quantity of times of NACKs, of a Un 1 interface, configured by the IAB donor for an IAB node 2 may be determined and allocated by an IAB node 1 DU, and may be sent to an IAB node 2 MT through the MAC CE or the PDCCH DCI.

A maximum quantity of UL HARQ retransmissions or a maximum quantity of times of NACKs, of a Un 2 interface, configured by the IAB donor for an IAB node 1 may be determined and allocated by an IAB donor DU, and may be sent to an IAB node 1 MT through the MAC CE or the PDCCH DCI.

In this embodiment, an example in which the first node is the IAB node 2 (IAB n2), the second node is the IAB node 1 (IAB n1), the second node is the parent node of the first node, and the first node sends uplink data to the second node is used for description.

In an example, the IAB node 2 finds that the quantity of the uplink (uplink, UL) HARQ retransmissions reaches the maximum quantity of the UL HARQ retransmissions, or the IAB node 2 finds that the quantity of the times of the HARQ NACKs received from the IAB node 1 reaches the maximum quantity of the times of the NACKs, a MAC layer of the IAB node 2 sends one indication information to an upper layer (for example, an RRC layer) of the IAB node 2. The indication information is used to indicate that the quantity of the UL HARQ retransmissions reaches the maximum quantity of the retransmissions or the quantity of the times of the received HARQ NACKs reaches the maximum quantity of the times of the NACKs, and the IAB node 2 considers, based on the indication information, that the RLF occurs on the Un 1 interface, and triggers an RRC connection reestablishment procedure or a handover process.

According to the triggering method for the radio link failure provided in this embodiment, in the uplink transmission process, the nodes can discover the radio link failure caused by an uplink problem, so that the RRC connection reestablishment procedure or the handover process can be accurately performed.

Based on the foregoing embodiments, after the first node determines that the radio link failure occurs on the link between the first node and the second node, the first node sends third indication information to the first terminal device, where the third indication information is used to trigger the first terminal device to perform ARQ retransmission at an RLC layer.

In a possible implementation, the third indication information may explicitly indicate the first terminal device, or may implicitly indicate the first terminal device, to trigger the first terminal device to perform the ARQ retransmission at the RLC layer.

For example, for the implicit indication, the third indication information may indicate, to the first terminal device, that the radio link failure occurs, and the first terminal device performs the ARQ retransmission at the RLC layer based on the radio link failure.

For example, for the explicit indication, the third indication information may indicate the first terminal to perform the ARQ retransmission at the RLC layer.

In a possible implementation, the third indication information may be carried in the RRC message. Specifically, an example in which the first node is the IAB node 2 is used for description. The third indication information may be carried in an RRC message between an IAB node 2 DU and the terminal device. Alternatively, the third indication information may be carried in the MAC CE or the PDCCH DCI.

A person skilled in the art may understand that the HARQ mechanism is designed for the MAC layer, the ARQ mechanism is designed for the RLC layer, the MAC layer is located at a lower layer of the RLC layer, and the MAC layer is closer to a physical layer. Transmission performed through the MAC layer can better reflect link quality. However, for the first node, once the MAC layer finds that the quantity of the HARQ retransmissions reaches the maximum quantity of the retransmissions configured by a network, and the latter finds that the quantity of received HARQ NACKs reaches the maximum quantity of the NACKs configured by the network, it is considered that the RLF occurs, and one indication information is sent to the RRC layer, so that the first node triggers the RRC connection reestablishment procedure or the handover process to recover the radio link. Once the link is recovered, the first node sends the third indication information to the first terminal device, to indicate the first terminal device to perform the ARQ retransmission at the RLC layer.

In this embodiment of this application, in the uplink transmission process, the third indication information is used to trigger the first terminal device to perform the ARQ retransmission at the RLC layer, to ensure that end-to-end transmission between the first terminal device and the donor base station can be normally performed, and ensure that no packet is lost.

### Embodiment of the downlink transmission

FIG. 6 is a schematic diagram of a scenario of a downlink transmission-based radio link failure according to an embodiment of this application. In the embodiment shown in FIG. 6, a newly added backhaul link RLF trigger condition is as follows:

A quantity of HARQ retransmissions performed on a downlink (Downlink, DL) backhaul link is equal to or greater than a maximum quantity of DL HARQ retransmissions, or a quantity of times of DL HARQ NACKs that are received is equal to or greater than a maximum quantity of times of NACKs.

A first node is a parent node of a second node, the second node is a child node of the first node, and the first node sends downlink data to the second node. When the first node finds that the quantity of the DL HARQ retransmissions reaches the specified maximum quantity of the retransmissions, or the quantity of the times of the HARQ NACKs received from the second node reaches the maximum quantity of the times of the NACKs, the first node determines that an RLF occurs on a link between the first node and the second node.

In a downlink transmission process, a manner in which the first node obtains first indication information may include the following possible implementations.

In a possible implementation, a donor base station (IAB donor, IAB D) configures the maximum quantity of the DL HARQ retransmissions or the maximum quantity of the times of the NACKs for each node.

Referring to FIG. 6 and FIG. 2, the IAB donor configures a maximum quantity of DL HARQ retransmissions or a maximum quantity of times of NACKs of a Uu interface for an IAB node 2, and the IAB donor configures a maximum quantity of DL HARQ retransmissions or a maximum quantity of times of NACKs of a Un 1 interface for an IAB node 1.

For example, the maximum quantity of the DL HARQ retransmissions or the maximum quantity of the times of the NACKs, of the Uu interface, configured by the IAB donor for the IAB node 2 may be determined and allocated by an IAB donor CU. The information is sent to an IAB node 2 MT through an RRC message, and the IAB node 2 MT forwards the RRC message to an IAB node 2 DU through an internal interface. Alternatively, the IAB donor CU sends the information to an IAB node 2 DU through an F1AP message.

The maximum quantity of the DL HARQ retransmissions or the maximum quantity of the times of the NACKs, of the Un 1 interface, configured by the IAB donor for the IAB node 1 may be determined and allocated by the IAB donor CU. The information is sent to an IAB node 1 MT through the RRC message, and the IAB node 1 MT forwards the RRC message to an IAB node 1 DU through an internal interface. Alternatively, the IAB donor CU sends the information to an IAB node 1 DU through an F1AP message.

In conclusion, the first node receives the radio resource control RRC message from a first network device, where the RRC message includes the maximum quantity of the retransmissions or the maximum quantity of the times of the NACKs, and the first network device is the donor base station.

In another possible implementation, the first node determines the maximum quantity of the DL HARQ retransmissions or the maximum quantity of the times of the NACKs.

Still referring to FIG. 6 and FIG. 2, an IAB node 2 determines a maximum quantity of DL HARQ retransmissions or a maximum quantity of times of NACKs, that is, an IAB node 2 DU determines a maximum quantity of DL HARQ retransmissions or a maximum quantity of times of NACKs of a Uu interface. An IAB node 1 determines a maximum quantity of DL HARQ retransmissions or a maximum quantity of times of NACKs, that is, an IAB node 1 DU determines a maximum quantity of DL HARQ retransmissions or a maximum quantity of times of NACKs of a Un 1 interface.

In this embodiment, an example in which the first node is the IAB node 1 (IAB n1), the second node is the IAB node 2 (IAB n2), the second node is the child node of the first node, and the first node sends downlink data to the second node is used for description.

In an example, the IAB node 1 finds that the quantity of the downlink (Downlink, DL) HARQ retransmissions reaches the maximum quantity of the DL HARQ retransmissions, or the IAB node 1 finds that the quantity of the times of the HARQ NACKs received from the IAB node 2 reaches the maximum quantity of the times of the NACKs, a MAC layer of the IAB node 1 sends one indication information to an upper layer (for example, an RRC layer) of the IAB node 1. The indication information is used to indicate that the quantity of the DL HARQ retransmissions reaches the maximum quantity of the retransmissions or the quantity of the times of the received HARQ NACKs reaches the maximum quantity of the times of the NACKs, and the IAB node 1 considers, based on the indication information, that the RLF occurs on the Un 1 interface, and triggers an RRC connection reestablishment procedure or a handover process.

According to the triggering method for the radio link failure provided in this embodiment, in the downlink transmission process, the nodes can discover the radio link failure caused by a downlink problem, so that the RRC connection reestablishment procedure or the handover process can be accurately performed to recover the link.

Based on the foregoing embodiments, the first node determines that the radio link failure occurs on the link between the first node and the second node, and the first node sends fourth indication information to a second network device, where the fourth indication information is used to trigger the second network device to perform ARQ retransmission at an RLC layer, and the second network device is a donor base station.

In a possible implementation, the fourth indication information may explicitly indicate the donor base station, or may implicitly indicate the donor base station, to trigger the donor base station to perform the ARQ retransmission at the RLC layer.

For example, for the implicit indication, the fourth indication information may indicate, to the donor base station, that the radio link failure occurs, and the donor base station performs the ARQ retransmission at the RLC layer based on the radio link failure.

For example, for the explicit indication, the fourth indication information may indicate the donor base station to perform the ARQ retransmission at the RLC layer.

In a possible implementation, the fourth indication information may be carried in the F1AP message, or may be carried in the RRC message. Specifically, an example in which the first node is the IAB node 1 is used for description. The fourth indication information may be carried in an F1AP message between the IAB node 1 DU and the IAB donor CU. Alternatively, the fourth indication information may be sent by the IAB node 1 DU to the IAB node 1 MT, and then the IAB node 1 MT sends the indication information to the IAB donor CU through the RRC message.

It can be learned from the foregoing that transmission performed through the MAC layer can better reflect link quality. However, for the first node, once the MAC layer finds that the quantity of the HARQ retransmissions reaches the maximum quantity of the retransmissions configured by a network, and the latter finds that the quantity of received HARQ NACKs reaches the maximum quantity of the NACKs configured by the network, it is considered that the RLF occurs, and one indication information is sent to the RRC layer, so that the first node triggers the RRC connection reestablishment procedure or the handover process to recover the radio link. Once the link is recovered, the first node sends the fourth indication information to the donor base station, to indicate the donor base station to perform the ARQ retransmission at the RLC layer.

In this embodiment of this application, in the downlink transmission process, the fourth indication information is used to trigger the donor base station to perform the ARQ retransmission at the RLC layer, to ensure that end-to-end transmission between the donor base station and the first terminal device can be normally performed.

In this embodiment, whether the radio link failure occurs on each node may be determined by adding the trigger condition, and whether the radio link failure occurs on each node may also be determined based on a downlink reference signal. Details are described below.

FIG. 7 is a flowchart of a triggering method for a radio link failure according to an embodiment of this application. As shown in FIG. 7, the method includes the following steps.

S701: A first node determines, based on a downlink reference signal sent by a second node, whether a radio link failure occurs on a link between the first node and the second node, where the second node is a parent node of the first node.

S702: If the radio link failure occurs, the first node sends indication information to a terminal device, where the indication information is used to trigger the terminal device to send an RLC status report to a network device.

In this embodiment, the first node may detect the downlink reference signal to determine whether the radio link failure occurs on the link between the first node and the second node.

In a possible implementation, when the first node performs radio link detection based on the downlink reference signal, and when N310 downlink out-of-syncs (out-of-sync) are consecutively received, the first node triggers starting of a timer T310. During running of the T310, if N311 downlink in-syncs are consecutively received, the timer T310 is stopped, to indicate that the link is recovered. If the timer T310 expires, it is considered that the radio link failure is detected and an RRC connection reestablishment procedure is triggered.

When finding that the radio link failure occurs on the link between the first node and the second node, the first node sends one indication information to the terminal device, to indicate the terminal device to send the RLC status report to the network device, namely, a donor base station. The RLC status report is used to feed back a receiving status of the terminal, to confirm data currently correctly received by the terminal device and lost data that needs to be retransmitted, to trigger the network device to perform ARQ retransmission at an RLC layer.

The indication information may be carried in a radio resource control RRC message. The indication information may be alternatively carried in a media access control control element (MAC Control Element, MAC CE).

If the first node is a parent node of the terminal, the first node may directly send the indication information to the terminal. If the first node is not the parent node of the terminal device, the first node sends the indication information to the terminal device through forwarding by an intermediate node. There may be one or more intermediate nodes. If there are a plurality of intermediate nodes, the intermediate nodes forward the indication information in sequence until the indication information is forwarded to the terminal.

The following describes in detail a process in which the first node sends the indication information to the terminal device with reference to FIG. 8.

In a possible implementation, the first node is an IAB node 2. If the IAB node 2 finds that an RLF occurs on a Un 1 interface, the IAB node 2 may send indication information to the terminal device through an RRC message, a MAC CE, or PDCCH DCI, to trigger the terminal device to feed back an RLC status report, so that an IAB donor triggers RLC retransmission based on the feedback of the RLC status report of the terminal device.

In addition, with reference to FIG. 2, an IAB node 2 MT first notifies an IAB node 2 DU, and the IAB node 2 DU sends the indication information to the terminal device through the RRC message, the MAC CE, or the PDCCH DCI.

In another possible implementation, the first node is an IAB node 1. If the IAB node 1 finds that an RLF occurs on a Un 2 interface, the IAB node 1 may send indication information to an IAB node 2 through an RRC message or a MAC CE, and the IAB node 2 forwards the indication information to the terminal device, to trigger the terminal device to feed back an RLC status report, so that an IAB donor triggers RLC retransmission based on the feedback of the RLC status report of the terminal device.

In addition, with reference to FIG. 2, an IAB node 1 MT first notifies an IAB node 1 DU, and the IAB node 1 DU sends the indication information to an IAB node 2 MT through the RRC message, the MAC CE, or PDCCH DCI. Then, the IAB node 2 MT notifies an IAB node 2 DU, and the IAB node 2 DU sends the indication information to the terminal device through the RRC message, the MAC CE, or the PDCCH DCI.

In this embodiment of this application, whether the radio link failure occurs may be determined by using a downlink reference signal, and this may determine whether the radio link failure occurs between nodes, so that an RRC connection reestablishment procedure or a handover process can be accurately triggered to recover the link.

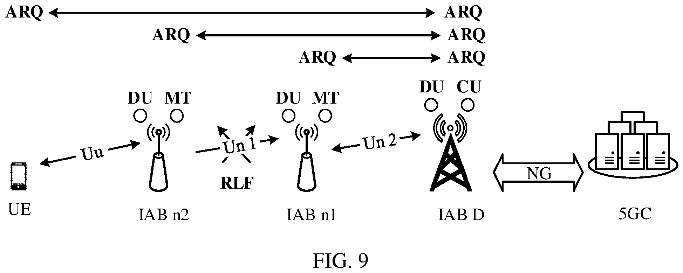

In this embodiment, the IAB node is used as a node for data backhaul, and an RLC layer on the IAB node has only a segmentation function. The IAB node, as a node, has operation, administration, and maintenance (Operation Administration and Maintenance, OAM) data, of the IAB node, that needs to be transmitted. In this case, the IAB node MT and the IAB donor also have an end-to-end ARQ of the IAB node MT. FIG. 9 is a schematic diagram of a triggering scenario of a radio link failure according to an embodiment of this application. As shown in FIG. 9, an IAB node 1 (IAB n1) and an IAB donor (IAB D) have peer RLC layers, and the RLC layer has an ARQ function. An IAB node 2 (IAB n2) and the IAB donor (IAB D) also have peer RLC layers, and the RLC layer has an ARQ function.

FIG. 9 is used as an example. In a possible implementation, in comparison with a Un 1 interface, a Un 2 interface first discovers whether a radio link failure occurs. When a quantity of RLC retransmissions triggered by the IAB node 1 based on an ARQ NACK fed back by the IAB donor reaches a maximum quantity of retransmissions, the IAB node 1 determines that the radio link failure occurs on the Un 2 interface, and sends one indication information to the IAB node 2, to notify the IAB node 2 that the radio link failure occurs on a link of the Un 2 interface.

If the IAB node 1 finds that the RLF occurs on the Un 2 interface, the IAB node 1 triggers RRC connection reestablishment to recover the link of the Un 2 interface. Once the link of the Un 2 interface of the IAB node 1 is recovered, the IAB node 1 sends one indication information to the IAB node 2, to notify the IAB node 2 that the link of the Un 2 interface is recovered.

Once the IAB node 2 triggers the RLC retransmission based on an end-to-end ARQ and the quantity of the RLC retransmissions reaches the maximum quantity of the retransmissions, the IAB node 2 determines, with reference to the indication information sent by the IAB node 1, whether the RLF occurs on the Un 1 interface.

For example, when the quantity of the RLC retransmissions triggered by the IAB node 2 based on the ARQ NACK fed back by the IAB donor reaches the maximum quantity of the retransmissions, the IAB node 2 may send one request to the IAB node 1, to request the IAB node 1 to feed back whether the RLF occurs on the link of the Un 2 interface. Alternatively, after discovering that the RLF occurs on the Un 2 interface, the IAB node 1 actively sends one indication information to the IAB node 2, to indicate that the radio link failure occurs on the link of the Un 2 interface. Alternatively, after discovering that the link of the Un 2 interface is recovered through the RRC connection reestablishment procedure, the IAB node 1 actively sends one indication information to the IAB node 2, to indicate that the link of the Un 2 interface is normal. The IAB node 2 needs to determine, based on the indication information of the IAB node 1, whether the RLF occurs on the Un 1 interface. For example, if the link of the Un 2 interface is normal, the IAB node 2 determines that the RLF occurs on the Un 1 interface.

In another possible implementation, the IAB donor determines, based on the quantity of ARQ NACKs fed back to the IAB node 2 and the quantity of ARQ NACKs fed back to the IAB node 1, whether the RLF occurs on the Un 1 interface. For example, the link of the Un 2 interface is normal, and the quantity of the ARQ NACKs fed back by the IAB donor to the IAB node 1 is less than a preset quantity of ARQ NACKs. If the RLF occurs on a link of the Un 1 interface, and the quantity of the ARQ NACKs fed back by the IAB donor to the IAB node 2 is greater than the preset quantity of the ARQ NACKs, it is considered that the RLF occurs on the Un 1 interface. Then, the IAB donor may notify, through an RRC message or an F1AP message, the IAB node 2 that the RLF occurs on the Un 1 interface of the IAB node 2, and trigger the IAB node 2 to perform an RRC connection reestablishment procedure or a handover process to recover the link.

In this embodiment of this application, in an end-to-end ARQ scenario, the nodes can discover the RLF caused by a link problem in time, and trigger the RRC connection reestablishment procedure or the handover process to recover the link.

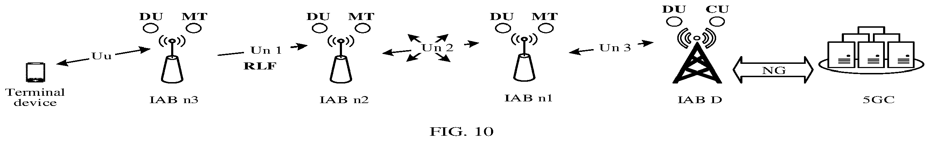

FIG. 10 is a schematic diagram of a scenario of a radio link failure according to an embodiment of this application. As shown in FIG. 10, a multi-hop relay network architecture provides a multi-hop scenario. The network architecture includes a terminal device, a plurality of IAB nodes, and an IAB donor. In this embodiment, three-hop data is used as an example for description.

When an IAB node 2 (IAB n2) detects that a radio link failure occurs between an IAB node 1 (IAB n1) and the IAB node 2, the IAB node 2 performs RRC reestablishment. If the IAB node 2 fails to perform the RRC reestablishment within a preset time, an IAB node 3 performs the RRC reestablishment, to ensure that a radio link of the IAB node 3 is normal.

The IAB node 2 detects whether the radio link failure occurs between the IAB node 1 and the IAB node 2 in a plurality of manners. In a possible implementation, whether the radio link failure occurs between two nodes may be detected based on whether a quantity of transmissions of data reaches a maximum quantity of retransmissions configured at an RLC layer. In another possible implementation, whether the radio link failure occurs may be detected by using a downlink reference signal. Details of another possible embodiment are not described in this embodiment.

With reference to the embodiments shown in FIG. 10, FIG. 11, and FIG. 12, the following describes in detail whether the IAB node 3 performs the RRC reestablishment. In the embodiment shown in FIG. 10, an example in which a second node (the IAB node 2) is a child node of a first node (the IAB node 1) and is a parent node of a third node (the IAB node 3) is used for description. When the second node is a parent node of the first node and is a child node of the third node, an implementation of the second node is similar to that of the third node, and details are not described herein again in this embodiment.

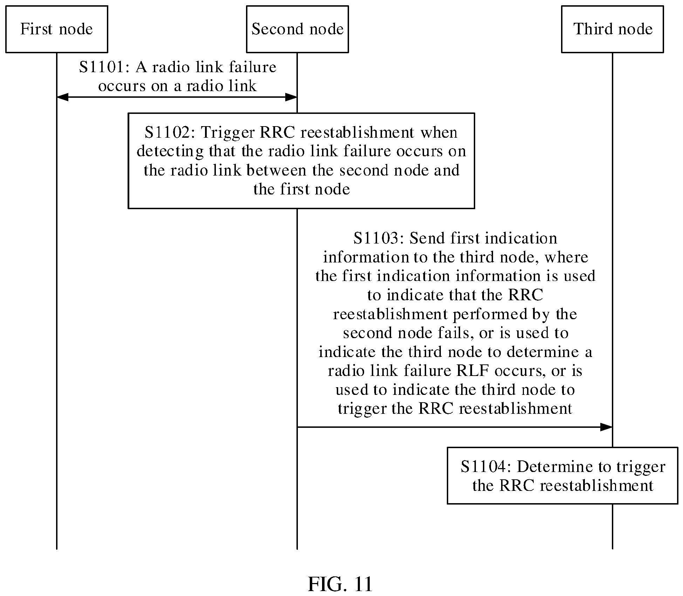

FIG. 11 is a flowchart of triggering signaling for a radio link failure according to an embodiment of this application. As shown in FIG. 11, the method includes the following steps.

S1101: A radio link failure occurs on a radio link between a first node and a second node.

S1102: The second node triggers RRC reestablishment when detecting that the radio link failure occurs on the radio link between the second node and the first node.

S1103: The second node sends first indication information to a third node, where the first indication information is used to indicate that the RRC reestablishment performed by the second node fails, or is used to indicate the third node to determine a radio link failure RLF, or is used to indicate the third node to trigger the RRC reestablishment.

S1104: The third node determines to trigger the RRC reestablishment.

When detecting that the radio link failure occurs on the radio link between the second node and the first node, the second node triggers the RRC reestablishment.

If the RRC reestablishment performed by the second node fails, the second node sends the first indication information to the third node, where the first indication information is used to indicate that the RRC reestablishment performed by the second node fails. When the third node learns that the RRC reestablishment performed by the second node fails, the third node triggers an RRC reestablishment procedure. The first indication information may be sent through an adaptation layer or a MAC layer. There is also an adaptation layer above an RLC layer between the second node and the third node, and the first indication information may be sent by using a control PDU of the adaptation layer, and may be sent by using a MAC CE of the MAC layer.

For example, the first indication information may explicitly or implicitly indicate that the RRC reestablishment performed by the second node fails. This is not limited in this embodiment. For example, the first indication information may be indication information that indicates the third node to trigger the RRC reestablishment, that is, implicitly indicates that the RRC reestablishment performed by the second node fails.

If the RRC reestablishment performed by the second node succeeds, the second node does not send the first indication information to the third node, that is, for the third node, the third node always considers that the radio link is normal.

In this embodiment of this application, when the RRC reestablishment performed by the second node fails, the second node sends, to the third node, the first indication information used to indicate that the RRC reestablishment fails, so that the third node can trigger the RRC reestablishment. This ensures that the third node can perform link reestablishment in time, and ensures that the third node can normally transmit data.

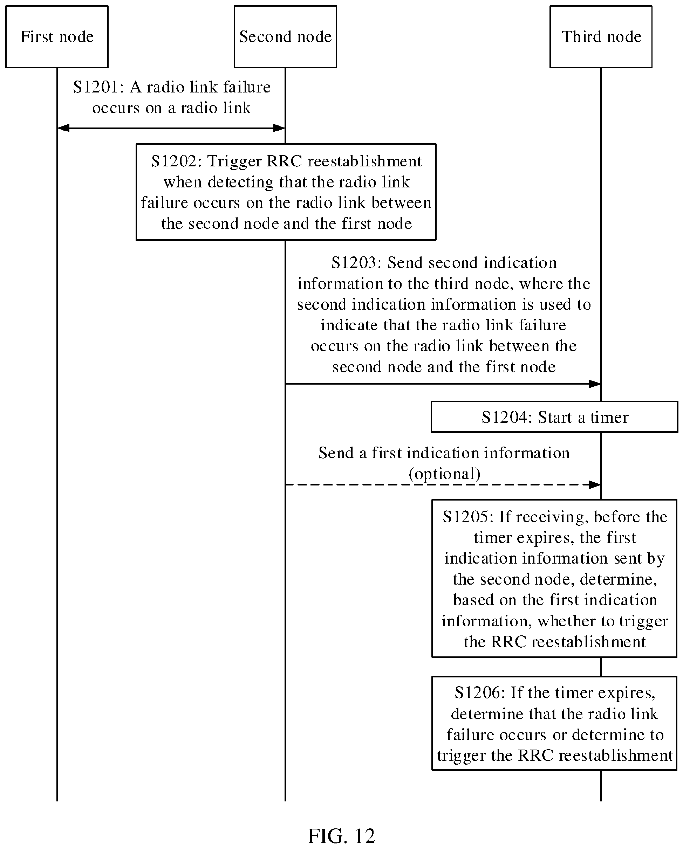

FIG. 12 is a flowchart of triggering signaling for a radio link failure according to an embodiment of this application. As shown in FIG. 12, the method includes the following steps.

S1201: A radio link failure occurs on a radio link between a first node and a second node.

S1202: The second node triggers RRC reestablishment when detecting that the radio link failure occurs on the radio link between the second node and the first node.

S 1203: The second node sends second indication information to a third node, where the second indication information is used to indicate that the radio link failure occurs on the radio link between the second node and the first node.

S 1204: The third node starts a timer.

S 1205: If the third node receives, before the timer expires, first indication information sent by the second node, the third node determines, based on the first indication information, whether to trigger the RRC reestablishment.

S 1206: If the timer expires, the third node determines that the radio link failure occurs or determines to trigger the RRC reestablishment.

In this embodiment, when the second node detects that the failure occurs on the radio link, the second node triggers the RRC reestablishment. The second node sends the second indication information to the third node, to indicate that the radio link failure occurs on the radio link between the second node and the first node. A sequence of triggering, by the second node, the RRC reestablishment and sending the second indication information to the third node is not limited. The second node may first trigger the RRC reestablishment, and then send the second indication information to the third node in a process of performing the RRC reestablishment. Alternatively, the second node first sends the second indication information to the third node, and then the second node triggers the RRC reestablishment.

When receiving the second indication information, the third node starts the timer. A time specified by the timer may be configured by a donor node, or may be configured by another node. This is not limited in this embodiment.

If the first indication information sent by the second node is received before the timer expires, and the first indication information is used to indicate that the RRC reestablishment fails, the third node triggers the RRC reestablishment, and stops the timer.

If the first indication information sent by the second node is received before the timer expires, and the first indication information is used to indicate that the RRC reestablishment succeeds, the third node disables the timer.

If the timer expires, the third node determines that the radio link failure occurs or determines to trigger the RRC reestablishment. That the timer expires means that the first indication information is not received within a period of time before the timer expires.

In another possible implementation, step S1204 is optional, and the third node may not start the timer. To be specific, in S1203, the second node sends the second indication information to the third node, where the second indication information is used to indicate that the radio link failure occurs on the radio link between the second node and the first node. The third node does not start the timer after receiving the second indication information. In S1205, the third node receives the first indication information sent by the second node, and determines, based on the first indication information, whether to trigger the RRC reestablishment.

A manner of sending the first indication information and the second indication information in this embodiment is similar to that of sending the first indication information in the embodiment shown in FIG. 11, and the indication may be an explicit indication or an implicit indication. Details are not described herein in this embodiment.

In this embodiment of this application, after receiving the second indication information used to indicate that the radio link failure occurs, the third node starts the timer, and determines, based on the first indication information received before the timer expires, whether to trigger the radio link failure or the RRC reestablishment. This ensures that the third node can perform link reestablishment in time, and ensures that the third node can normally transmit data.

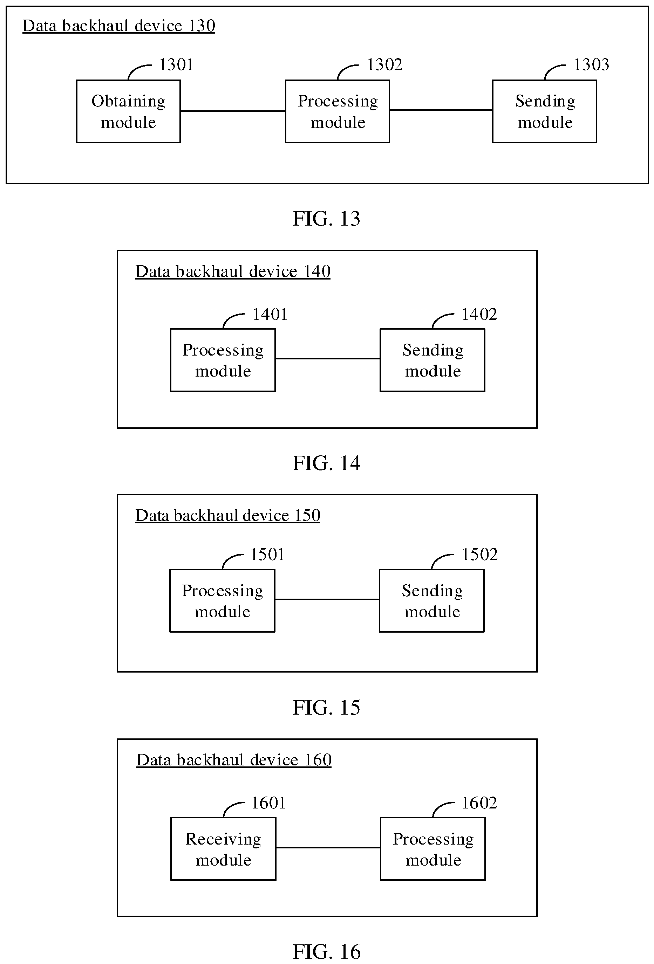

FIG. 13 is a schematic structural diagram of a data backhaul device according to an embodiment of this application. The data backhaul device 130 is referred to as a first node. As shown in FIG. 13, the data backhaul device 130 includes:
an obtaining mode 1301, configured to obtain first indication information, where the first indication information includes a maximum quantity of hybrid automatic repeat request HARQ retransmissions performed by the first node on a second node, or a maximum quantity of times of HARQ NACKs that are sent by the second node and that are received by the first node; and
a processing module 1302, configured to determine, based on the first indication information, whether a radio link failure occurs on a link between the first node and the second node.

In a possible design, the first node is the data backhaul device, and the second node is a child node or a parent node of the first node.

In a possible design, the processing module 1302 is specifically configured to:
if a quantity of HARQ retransmissions performed by the first node on the second node is greater than or equal to the maximum quantity of the retransmissions indicated in the first indication information, determine that the radio link failure occurs on the link between the first node and the second node; or
if a quantity of times of HARQ NACKs that are sent by the second node and that are received by the first node is greater than or equal to the maximum quantity of the times of the NACKs indicated in the first indication information, determine that the radio link failure occurs on the link between the first node and the second node.

In a possible design, the obtaining module 1301 is specifically configured to: receive a radio resource control RRC message from a first network device, where the RRC message includes the maximum quantity of the retransmissions or the maximum quantity of the times of the NACKs, and the first network device is a donor base station.

In a possible design, if the second node is the parent node of the first node, the RRC message is determined by the first network device based on second indication information, the second indication information includes the maximum quantity of the retransmissions or the maximum quantity of the times of the NACKs, and the second indication information is sent by the second node to the first network device.

In a possible design, if the second node is the child node of the first node, the obtaining module 1301 is specifically configured to: determine, the maximum quantity of the retransmissions or the maximum quantity of the times of the NACKs.

In a possible design, if the second node is the parent node of the first node, the device further includes a sending module 1303, where
the sending module 1303 is configured to send third indication information to a first terminal device when it is determined that the radio link failure occurs on the link between the first node and the second node, where the third indication information is used to trigger the first terminal device to perform automatic repeat request ARQ retransmission at a radio link control RLC layer.

In a possible design, if the second node is the child node of the first node, the device further includes a sending module 1303, where
the sending module 1303 is configured to send fourth indication information to a second network device when it is determined that the radio link failure occurs on the link between the first node and the second node, where the fourth indication information is used to trigger the second network device to perform automatic repeat request ARQ retransmission at a radio link control RLC layer, where the second network device is a donor base station.

The data backhaul device provided in this embodiment of this application is configured to perform the methods performed by the first node in the embodiments in FIG. 3 to FIG. 6. Implementation principles and technical effects of the data backhaul device are similar to those of the methods, and details are not described herein again in this embodiment.

FIG. 14 is a schematic structural diagram of a data backhaul device according to an embodiment of this application. The data backhaul device 140 is referred to as a first node. As shown in FIG. 14, the data backhaul device 140 includes:
a processing module 1401, configured to determine, based on a downlink reference signal sent by a second node, whether a radio link failure occurs on a link between the first node and the second node, where the second node is a parent node of the first node; and
a sending module 1402, configured to: if the radio link failure occurs, send indication information to a terminal device, where the indication information is used to trigger the terminal device to send an RLC status report to a network device.

In a possible design, the indication information is carried in a radio resource control RRC message.

In a possible design, the indication information is carried in a media access control control element MAC CE.

In a possible design, if the first node is not a parent node of the terminal device, the sending module 1402 is specifically configured to: send the indication information to the terminal device through forwarding by an intermediate node.

The data backhaul device provided in this embodiment of this application is configured to perform the methods performed by the first node in the embodiments in FIG. 7 to FIG. 9. Implementation principles and technical effects of the data backhaul device are similar to those of the methods, and details are not described herein again in this embodiment.

FIG. 15 is a schematic structural diagram of a data backhaul device according to an embodiment of this application. The data backhaul device 150 is referred to as a second node. As shown in FIG. 15, the data backhaul device 150 includes:
a processing module 1501, configured to trigger RRC reestablishment when detecting that a radio link failure occurs on a radio link between the second node and a first node; and
a sending module 1502, configured to send first indication information to a third node, where the first indication information is used to indicate a result of the RRC reestablishment of the second node, where
   the second node is a child node of the first node, and is a parent node of the third node.

In a possible design, the first indication information is used to indicate that the RRC reestablishment performed by the second node fails, or is used to indicate the third node to determine a radio link failure RLF, or is used to indicate the third node to trigger the RRC reestablishment.

In a possible design, the sending module 1502 is further configured to: before the second node sends the first indication information to the third node, send second indication information to the third node, where the second indication information is used to indicate that the radio link failure occurs on the radio link between the second node and the first node.

In a possible design, the first indication information is used to indicate that the RRC reestablishment performed by the second node fails or succeeds.

The data backhaul device provided in this embodiment of this application is configured to perform the methods performed by the second node in the embodiments in FIG. 10 to FIG. 12. Implementation principles and technical effects of the data backhaul device are similar to those of the methods, and details are not described herein again in this embodiment.

FIG. 16 is a schematic structural diagram of a data backhaul device according to an embodiment of this application. The data backhaul device 160 is referred to as a third node. As shown in FIG. 16, the data backhaul apparatus 160 includes:
a receiving module 1601, configured to receive first indication information sent by a second node, where the first indication information is sent by the second node after the second node determines that a radio link failure occurs on a radio link between the second node and a first node, and the first indication information is used to indicate a result of RRC reestablishment of the second node; and
a processing module 1602, configured to determine, based on the first indication information, whether to trigger the RRC reestablishment, where
   the second node is a child node of the first node, and is a parent node of the third node.

In a possible design, the processing module 1602 is specifically configured to:

If the first indication information is used to indicate that the RRC reestablishment performed by the second node fails, or is used to indicate the third node to determine a radio link failure RLF, or is used to indicate the third node to trigger the RRC reestablishment, the third node determines that the radio link failure occurs or triggers the RRC reestablishment.

In a possible design, the receiving module 1601 is further configured to: before the third node receives the first indication information sent by the second node, start a timer after the receiving module receives second indication information sent by the second node, where the second indication information is used to indicate that the radio link failure occurs on the radio link between the second node and the first node.

In a possible design, if the first indication information is received before the timer expires, the processing module 1602 is specifically configured to:
if the first indication information is used to indicate that the RRC reestablishment performed by the second node fails, trigger the RRC reestablishment, and stop the timer; or
if the first indication information is used to indicate that the RRC reestablishment performed by the second node succeeds, stop the timer.

In a possible design, if the timer expires, the processing module 1602 is further configured to determine that a radio link failure occurs or trigger RRC reestablishment.

The data backhaul device provided in this embodiment of this application is configured to perform the methods performed by the third node in the embodiments in FIG. 10 to FIG. 12. Implementation principles and technical effects of the data backhaul device are similar to those of the methods, and details are not described herein again in this embodiment.

During hardware implementation, the processing module in this embodiment may be integrated into a processor for implementation, the sending module may be integrated into a transmitter for implementation, and the receiving module may be integrated into a transmitter for implementation.

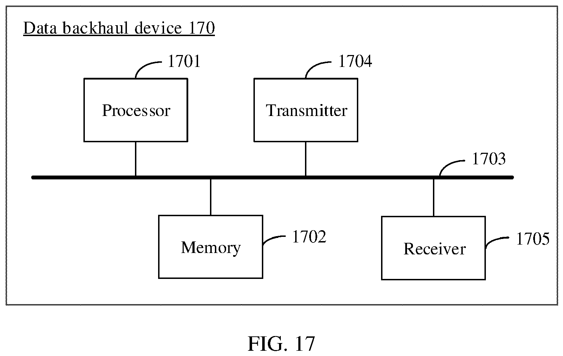

FIG. 17 is a schematic structural diagram of a data backhaul device according to an embodiment of this application. As shown in FIG. 17, the data backhaul device 170 provided in this embodiment includes a processor 1701 and a memory 1702, where
the memory 1702 is configured to store a computer program; and
the processor 1701 is configured to execute the computer program stored in the memory, to implement the steps performed by the data backhaul device in the foregoing embodiments. For example, the method performed by the first node in the embodiments in FIG. 3 to FIG. 6 is performed, or the method performed by the first node in the embodiments in FIG. 7 to FIG. 9 is performed, or the method performed by the second node in the embodiments in FIG. 10 to FIG. 12 is performed, or the method performed by the third node in the embodiments in FIG. 10 to FIG. 12 is performed. For details, refer to related descriptions in the foregoing method embodiments.

In a possible implementation, the memory 1702 may be independent, or may be integrated with the processor 1701.

When the memory 1702 is a component independent of the processor 1701, the data backhaul device 170 may further include a bus 1703, configured to connect the memory 1702 to the processor 1701.

The data backhaul device 170 shown in FIG. 17 may further include a transmitter 1704 and a receiver 1705. The transmitter 1704 may send various types of indication information, and the receiver 1705 may receive various types of indication information.

The data backhaul device provided in this embodiment is configured to perform the methods performed by the nodes in the foregoing embodiments. Implementation principles and technical effects of the data backhaul device are similar to those of the methods, and details are not described herein again in this embodiment.

An embodiment of this application further provides a storage medium, where the storage medium includes a computer program, and the computer program is used to implement: the method performed by the first node in the embodiments in FIG. 3 to FIG. 6, or the method performed by the first node in the embodiments in FIG. 7 to FIG. 9, or the method performed by the second node in the embodiments in FIG. 10 to FIG. 12, or the method performed by the third node in the embodiments in FIG. 10 to FIG. 12.

An embodiment of this application provides a computer program product, where the computer program product includes computer program code, and when the computer program code is run on a computer, the computer is enabled to perform: the method performed by the first node in the embodiments in FIG. 3 to FIG. 6, or the method performed by the first node in the embodiments in FIG. 7 to FIG. 9, or the method performed by the second node in the embodiments in FIG. 10 to FIG. 12, or the method performed by the third node in the embodiments in FIG. 10 to FIG. 12.

An embodiment of this application provides a chip. The chip includes a processor, and may further include a memory, where the memory is configured to store a computer program, and the processor is configured to invoke the computer program from the memory and run the computer program, so that a communications device on which the chip is installed performs: the method performed by the first node in the embodiments in FIG. 3 to FIG. 6, or the method performed by the first node in the embodiments in FIG. 7 to FIG. 9, or the method performed by the second node in the embodiments in FIG. 10 to FIG. 12, or the method performed by the third node in the embodiments in FIG. 10 to FIG. 12.

In the several embodiments provided in this application, it should be understood that the disclosed device and method may be implemented in other manners. For example, the described device embodiments are merely examples. For example, division into the modules is merely logical function division and may be other division in an actual implementation. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical units, may be located in one position, or may be distributed on a plurality of network units. Some or all the modules may be selected based on an actual requirement to achieve the objectives of the solutions of the embodiments.

In addition, function modules in the embodiments of this application may be integrated into one processing unit, or each of the modules may exist alone physically, or two or more modules are integrated into one module. The unit integrated from the modules may be implemented in a form of hardware, or may be implemented in a form of hardware in addition to a software function unit.

When the foregoing integrated module is implemented in a form of a software function module, the integrated unit may be stored in a computer-readable storage medium. The software function module is stored in a storage medium and includes several instructions for instructing a computer device (which may be a personal computer, a server, or a network device) or a processor (English: processor) to perform some of the steps of the methods described in the embodiments of this application.

It should be understood that the processor may be a central processing unit (English: Central Processing Unit, CPU for short), or may be another general-purpose processor, a digital signal processor (English: Digital Signal Processor, DSP for short), an application-specific integrated circuit (English: Application Specific Integrated Circuit, ASIC for short), or the like. The general-purpose processor may be a microprocessor, or the processor may be any conventional processor or the like. Steps of the methods disclosed with reference to this application may be directly performed and accomplished by a hardware processor, or may be performed and accomplished by a combination of hardware and a software module in a processor.

The memory may include a high-speed RAM memory, and may further include a nonvolatile memory NVM, for example, at least one magnetic disk memory, or may be a USB flash drive, a removable hard disk, a read-only memory, a magnetic disk, an optical disc, or the like.

The bus may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be classified into an address bus, a data bus, a control bus, and the like. For ease of representation, the bus in the accompanying drawings of this application is not limited to only one bus or only one type of bus.

The storage medium may be implemented by any type of volatile or nonvolatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc. The storage medium may be any available medium accessible to a general-purpose or special-purpose computer.

For example, a storage medium is coupled to a processor, so that the processor can read information from the storage medium or write information into the storage medium. Certainly, the storage medium may be a component of the processor. The processor and the storage medium may be located in an application-specific integrated circuit (Application Specific Integrated Circuits, ASIC for short). Certainly, the processor and the storage medium may alternatively exist in the device as discrete components.

## Claims

1. A triggering method for a radio link failure, comprising:
obtaining, by a first node, first indication information, wherein the first indication information comprises a maximum quantity of hybrid automatic repeat request HARQ retransmissions performed by the first node on a second node, or a maximum quantity of times of HARQ NACKs that are sent by the second node and that are received by the first node; and
determining, by the first node based on the first indication information, whether a radio link failure occurs on a link between the first node and the second node.

2. The method according to claim 1, wherein the first node is a data backhaul device, and the second node is a child node or a parent node of the first node.

3. The method according to claim 1 or 2, wherein the determining, by the first node based on the first indication information, whether a radio link failure occurs on a link between the first node and the second node comprises:
if a quantity of HARQ retransmissions performed by the first node on the second node is greater than or equal to the maximum quantity of the retransmissions indicated in the first indication information, determining, by the first node, that the radio link failure occurs on the link between the first node and the second node; or
if a quantity of times of HARQ NACKs that are sent by the second node and that are received by the first node is greater than or equal to the maximum quantity of the times of the NACKs indicated in the first indication information, determining, by the first node, that the radio link failure occurs on the link between the first node and the second node.

4. The method according to any one of claims 1 to 3, wherein the obtaining, by a first node, first indication information comprises:
receiving, by the first node, a radio resource control RRC message from a first network device, wherein the RRC message comprises the maximum quantity of the retransmissions or the maximum quantity of the times of the NACKs, and the first network device is a donor base station.

5. The method according to claim 4, wherein if the second node is the parent node of the first node,
the RRC message is determined by the first network device based on second indication information, the second indication information comprises the maximum quantity of the retransmissions or the maximum quantity of the times of the NACKs, and the second indication information is sent by the second node to the first network device.

6. The method according to any one of claims 1 to 3, wherein if the second node is the child node of the first node, the obtaining, by a first node, first indication information comprises:
determining, by the first node, the maximum quantity of the retransmissions or the maximum quantity of the times of the NACKs.

7. The method according to any one of claims 1 to 3, wherein if the second node is the parent node of the first node, and the first node determines that the radio link failure occurs on the link between the first node and the second node, the method further comprises:
sending, by the first node, third indication information to a first terminal device, wherein the third indication information is used to trigger the first terminal device to perform automatic repeat request ARQ retransmission at a radio link control RLC layer.

8. The method according to any one of claims 1 to 3, wherein if the second node is the child node of the first node, and the first node determines that the radio link failure occurs on the link between the first node and the second node, the method further comprises:
sending, by the first node, fourth indication information to a second network device, wherein the fourth indication information is used to trigger the second network device to perform automatic repeat request ARQ retransmission at a radio link control RLC layer, and the second network device is a donor base station.

9. A triggering method for a radio link failure, comprising:
triggering, by a second node, link recovery when detecting that a radio link failure occurs on a radio link between the second node and a first node; and
sending, by the second node, first indication information to a third node, wherein the first indication information is used to indicate a result of the link recovery of the second node, wherein
the second node is a child node of the first node, and is a parent node of the third node.

10. The method according to claim 9, wherein before the sending, by the second node, first indication information to a third node, the method further comprises:
the link recovery performed by the second node fails.

11. The method according to claim 10, wherein the first indication information is used to indicate that the link recovery performed by the second node fails, or used to indicate the radio link failure RLF to the third node, or used to indicate the third node to trigger the link recovery.

12. The method according to claim 9 or 10, wherein before the sending, by the second node, first indication information to a third node, the method further comprises:
sending, by the second node, second indication information to the third node, wherein the second indication information is used to indicate that the radio link failure occurs on the radio link between the second node and the first node.

13. The method according to claim 12, wherein the first indication information is used to indicate that the link recovery performed by the second node fails or succeeds.

14. The method according to any one of claims 9 to 13, wherein the sending, by the second node, first indication information to a third node comprises:
sending, by the second node, the first indication information to the third node through an adaptation layer or a MAC layer.

15. The method according to claim 12, wherein the sending, by the second node, second indication information to the third node comprises:
sending, by the second node, the second indication information to the third node through an adaptation layer or a MAC layer.

16. A triggering method for a radio link failure, comprising:
receiving, by a third node, first indication information sent by a second node, wherein the first indication information is sent by the second node after the second node determines that a radio link failure occurs on a radio link between the second node and a first node, and the first indication information is used to indicate a result of link recovery of the second node; and
obtaining, by the third node based on the first indication information, the result of the link recovery of the second node, wherein
the second node is a child node of the first node, and is a parent node of the third node.

17. The method according to claim 16, wherein before the receiving, by a third node, first indication information sent by a second node, the method further comprises:
the link recovery performed by the second node fails.

18. The method according to claim 17, wherein the first indication information is used to indicate that the link recovery performed by the second node fails, or used to indicate the radio link failure RLF to the third node, or used to indicate the third node to trigger the link recovery.

19. The method according to claim 16 or 17, wherein before the receiving, by a third node, first indication information sent by a second node, the method further comprises:
starting, by the third node, a timer after the third node receives second indication information sent by the second node, wherein the second indication information is used to indicate that the radio link failure occurs on the radio link between the second node and the first node.

20. The method according to claim 19, wherein if the first indication information is received before the timer expires, after the obtaining the result of the link recovery of the second node, the method further comprises:
if the first indication information is used to indicate that the link recovery performed by the second node fails, triggering, by the third node, the link recovery, and stopping the timer; or
if the first indication information is used to indicate that the link recovery performed by the second node succeeds, stopping, by the third node, the timer.

21. The method according to claim 19, wherein if the timer expires, the third node determines that the radio link failure occurs or triggers the link recovery.

22. The method according to any one of claims 16 to 21, wherein the receiving, by a third node, first indication information sent by a second node comprises:
receiving, by the third node, the first indication information sent by the second node through an adaptation layer or a MAC layer.

23. The method according to claim 19, wherein that the third node receives second indication information sent by the second node comprises:
receiving, by the third node, the second indication information sent by the second node through an adaptation layer or a MAC layer.

24. A data backhaul device, wherein the device is referred to as a first node and comprises:
an obtaining mode, configured to obtain first indication information, wherein the first indication information comprises a maximum quantity of hybrid automatic repeat request HARQ retransmissions performed by the first node on a second node, or a maximum quantity of times of HARQ NACKs that are sent by the second node and that are received by the first node; and
a processing module, configured to determine, based on the first indication information, whether a radio link failure occurs on a link between the first node and the second node.

25. The device according to claim 24, wherein the first node is the data backhaul device, and the second node is a child node or a parent node of the first node.

26. The device according to claim 24 or 25, wherein the processing module is specifically configured to:
if a quantity of HARQ retransmissions performed by the first node on the second node is greater than or equal to the maximum quantity of the retransmissions indicated in the first indication information, determine that the radio link failure occurs on the link between the first node and the second node; or
if a quantity of times of HARQ NACKs that are sent by the second node and that are received by the first node is greater than or equal to the maximum quantity of the times of the NACKs indicated in the first indication information, determine that the radio link failure occurs on the link between the first node and the second node.

27. The device according to any one of claims 24 to 26, wherein the obtaining module is specifically configured to: receive a radio resource control RRC message from a first network device, wherein the RRC message comprises the maximum quantity of the retransmissions or the maximum quantity of the times of the NACKs, and the first network device is a donor base station.

28. The device according to claim 27, wherein if the second node is the parent node of the first node, the RRC message is determined by the first network device based on second indication information, the second indication information comprises the maximum quantity of the retransmissions or the maximum quantity of the times of the NACKs, and the second indication information is sent by the second node to the first network device.

29. The device according to any one of claims 24 to 26, wherein if the second node is the child node of the first node, the obtaining module is specifically configured to: determine, the maximum quantity of the retransmissions or the maximum quantity of the times of the NACKs.

30. The device according to any one of claims 24 to 26, wherein if the second node is the parent node of the first node, the device further comprises a sending module, wherein
the sending module is configured to send third indication information to a first terminal device when the processing module determines that the radio link failure occurs on the link between the first node and the second node, wherein the third indication information is used to trigger the first terminal device to perform automatic repeat request ARQ retransmission at a radio link control RLC layer.

31. The device according to any one of claims 24 to 26, wherein if the second node is the child node of the first node, the device further comprises a sending module, wherein
the sending module is configured to send fourth indication information to a second network device when it is determined that the radio link failure occurs on the link between the first node and the second node, wherein the fourth indication information is used to trigger the second network device to perform automatic repeat request ARQ retransmission at a radio link control RLC layer, wherein the second network device is a donor base station.

32. A data backhaul device, comprising a memory, a processor, and a computer program, wherein the computer program is stored in the memory, and the processor runs the computer program to perform the method according to any one of claims 1 to 8, or perform the method according to any one of claims 9 to 15, or perform the method according to any one of claims 16 to 23.

33. A storage medium, wherein the storage medium comprises a computer program, and the computer program is used to implement the method according to any one of claims 1 to 8, or implement the method according to any one of claims 9 to 15, or implement the method according to any one of claims 16 to 23.

34. A computer program product, wherein the computer program product comprises computer program code, and when the computer program code is run on a computer, the computer is enabled to perform the method according to any one of claims 1 to 8, or implement the method according to any one of claims 9 to 15, or implement the method according to any one of claims 16 to 23.

35. A chip, comprising a processor and a memory, wherein the memory is configured to store a computer program, and the processor is configured to execute the computer program in the memory, so that a communications device on which the chip is installed performs the method according to any one of claims 1 to 8, or implements the method according to any one of claims 9 to 15, or implements the method according to any one of claims 16 to 23.

36. A data backhaul system, wherein the data backhaul system comprises a terminal device, a data backhaul device, and a donor network device, and the data backhaul device is configured to perform the method according to any one of claims 1 to 8, or implement the method according to any one of claims 9 to 15, or implement the method according to any one of claims 16 to 23.
